# EUROPEAN PATENT APPLICATION

(11) **EP 3 335 534 A1**
(43) Date of publication of application: **20.06.2018**
(21) Application number: 17207425.4
(22) Date of filing: 14.12.2017
(51) Int. Cl.: A01C 7/08, A01C 7/10

(54) **VALVE FOR SEED DISPENSER FOR SEEDERS**

(30) Priority: 16.12.2016 IT 201600127218
(71) Applicant: M.C. Elettronica S.R.L., 45024 Fiesso Umbertiano RO (IT)
(72) Inventor: MANTOVANI, Claudio, 45024 Fiesso Umbertiano RO (IT)
(74) Representative: Modiano, Micaela Nadia

(57) **Abstract**

A valve (10) for a seed dispenser for seeders, comprising a box-like body (11), inside which there is an entry passage (12) and an exit passage (13) and wherein there is a motorized redirection device (15) designed to determine whether or not seeds transit from the entry passage (12) toward the exit passage (13), the motorized redirection device (15) comprises a rotating body (16) which has a cylindrical volume with a redirection surface (17) that is transverse with respect to its rotation axis (X), the perimetric edge (18) of the redirection surface (17) being shaped to arrange itself proximate to the internal surface (19) of the exit passage (13) both in a configuration for the transit of seeds toward the exit passage and in a configuration in which transit is prevented; at the exit passage (13) there is a seed passage detector (20).

## Description

The present invention relates to a valve for seed dispenser for seeders.

The valve is applied in the field of agricultural machines, specifically for seeders, in particular for the exclusion of seeding or fertilizer rows.

Currently known valves for seed dispenser for seeders generally comprise a box-like body, inside which there is an entry passage, an exit passage and optionally a discharge passage for the return of the seeds to the reservoir from which they were taken; in the box-like body there is a motorized redirection device that is configured to determine whether or not seeds transit from the entry passage toward the exit passage or toward the discharge passage.

The motorized redirection device is constituted by an electric motor that is designed to rotate a redirection partition that is hinged along one edge and is shaped to rotate between a closed valve configuration, in which it obstructs the exit passage, optionally redirecting the seeds toward the discharge passage, if present, and an open valve configuration, in which the exit passage is open.

The redirection partition is hinged to the box-like body by a first end thereof, while the body of the redirection partition rotates so as to move its opposite free end from a position of maximum distance from the internal surface of the exit passage, in the configuration in which the exit passage is open, to a minimum distance, or contact distance, with the internal surface of the exit passage, in the configuration in which the exit passage is obstructed.

The valves with hinged-shutter redirection device, despite being known and widespread, have some limitations.

A first limitation is constituted by the fact that due to the shutter-like movement of the redirection partition, during a closure rotation material often remains jammed between the internal surface of the exit passage and the redirection partition; this event prevents the correct closure of the valve and entails the consequent risk that the flow of seeds may continue in an unwanted manner.

In order to obviate this drawback, an operator, or an electronic control system on board the valve, which becomes aware of the event, must intervene so that the redirection partition is rotated in the direction for opening it and rapidly rotated in the closing direction, in order to free the jammed seeds and allow the correct closure of the valve.

A second important limitation is constituted by the fact that the rotary motion that the redirection partition must perform in order to open the exit passage and therefore the valve is opposite with respect to the outgoing seed stream; the stream of seeds, by striking said redirection partition, generates thereon a force which opposes its opening rotation, causing stress situations for the actuation motor of the motorized redirection device, which is required to consume more energy in order to operate correctly.

These known valves, in order to check with certainty whether there is or not a flow of seeds through the exit passage, are provided with an integrated optical sensor that is interconnected to an electronic board to detect whether seeds pass or not.

These valves are therefore rendered more complex and therefore expensive due to the presence of this additional component adapted to verify the correct operation of said valve.

The aim of the present invention is to provide a valve for seed dispenser for seeders that is capable of improving the background art in one or more of the aspects indicated above.

Within this aim, an object of the invention is to provide a valve that is more reliable and precise than known valves.

Another object of the invention is to provide a valve in which the risk of failed or incorrect closure of the valve, with consequent dispersion of seeds, is eliminated.

A further object of the invention is to provide a valve the motorized redirection device of which can act precisely, repeatably and without its motor being subjected to unwanted stresses.

A still further object of the invention is to provide a valve that allows higher precision in the analysis of the stream of seeds.

This aim, and these and other objects which will become better apparent hereinafter, are achieved by a valve for seed dispenser for seeders according to claim 1, optionally provided with one or more of the characteristics of the dependent claims.

Further characteristics and advantages of the invention will become better apparent from the description of a preferred but not exclusive embodiment of the valve according to the invention, illustrated by way of nonlimiting example in the accompanying drawings, wherein:
Figure 1 is a view of a valve according to the invention installed on a central dispenser or mushroom;
Figure 2 is a sectional and partially exploded side view of a valve according to the invention;
Figure 3 is a perspective view of the valve according to the invention in a first configuration for use thereof;
Figure 4 is a perspective view of a valve according to the invention in a second configuration for use thereof.

With reference to the cited figures, a valve for seed dispenser for seeders according to the invention is designated generally by the reference numeral 10.

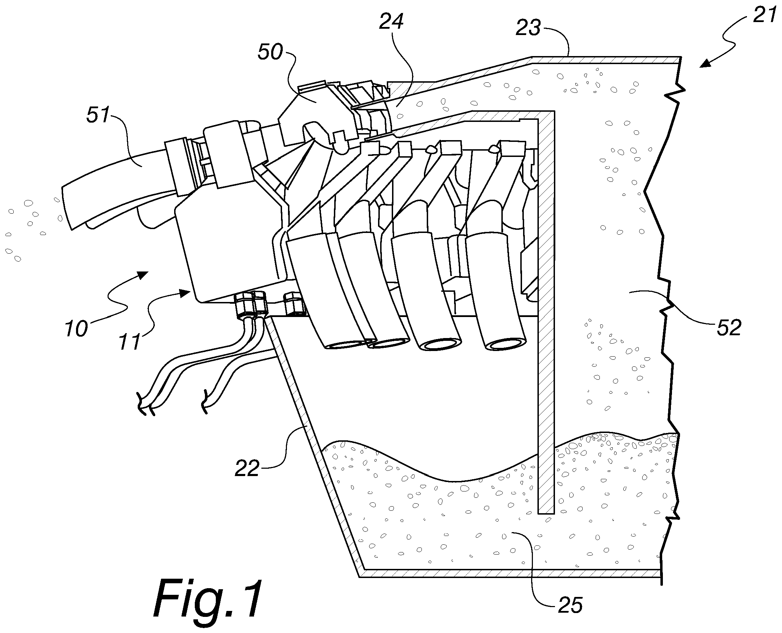

A valve 10 according to the invention is shown in Figure 1 installed on a central dispenser 21, of a known type, which comprises a hopper reservoir 22 for the containment of seeds and a tubular head 23 for the rise and distribution of the seeds 25, arranged so as to draw from the hopper reservoir 22.

The seeds are moved by pneumatic systems, which are to be understood as also being of a known type.

Multiple fixing sleeves 24 for valves 10 according to the invention extend radially from the top of the tubular head 23.

The valve 10 comprises a box-like body 11, inside which there are an entry passage 12 and an exit passage 13, and in which there is a motorized redirection device 15 which is configured to cause whether or not seeds transit from the entry passage 12 toward the exit passage 13.

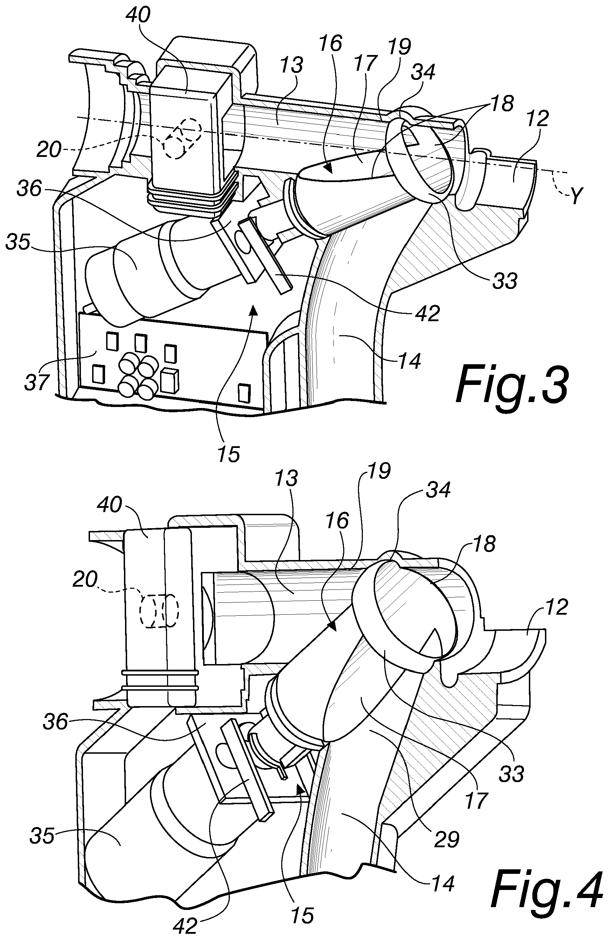

The motorized redirection device 15 comprises a rotating body 16 which has a cylindrical volume with a redirection surface 17, clearly visible in Figures 3 and 4, that is transverse with respect to its rotation axis X; the perimetric edge 18 of said redirection surface 17 being shaped to arrange itself proximate to the internal surface 19 of the exit passage 13 both in a configuration for the transit of seeds toward the exit passage and in a configuration in which transit is prevented;

At the exit passage 13 there is a seed passage detector 20.

In the embodiment of the invention described herein by way of nonlimiting example of the invention, the valve 10 is of the three-way type and comprises a return discharge passage 14, the motorized redirection device 15 being configured to determine the transit of seeds from the entry passage 12 toward the exit passage 13, or toward the return discharge passage 14.

The perimetric edge 18 of the redirection surface 17 is shaped to arrange itself proximate to the internal surface 19 of the exit passage 13 and the internal surface 29 of the discharge passage 14 in a configuration for the transit of seeds toward the exit passage, in a configuration for the transit of seeds toward the discharge and return passage, and in the intermediate configurations.

By virtue of this particular structure of the rotating body 16, it is capable of directing the flow of seeds or fertilizer, with its redirection surface 17, without the presence of interspaces between the rotating body 16 itself and the exit passage 13 or discharge passage 14 in which seeds or fertilizer can become jammed.

The redirection surface 17 is configured so that when the rotating body 16 is in the configuration for redirection toward the discharge passage 14, the direction Y of the entry passage 12, or the entry direction of the seeds in the valve, encounters a reference line Z of the redirection surface 17, forming with it a redirection angle 30 greater than 90°.

The rotating body 16 is arranged so that its rotation axis Z intersects the direction Y of the entry passage 12 so as to form an angle 31 of less than 90°, with the rotating body 16 arranged on the opposite side of the vertex A of the angle 31 with respect to the entry passage 12; by virtue of this configuration, the rotating body 16 is capable of absorbing the impacts of the incoming seeds with respect to hinged-shutter redirection partitions of the known type.

The rotating body 16 has, at its free end, a flexing-preventing external annular protrusion 33, which extends from the perimetric edge 18 with an axial symmetry with respect to the rotation axis X, the flexing-preventing annular protrusion 33 being arranged so as to rotate in an annular guiding slot 34 that is defined inside the box-like body 11.

The annular guiding slot 34, in particular, is formed on the internal surface of the channels that define the entry passage 12 and the exit passage 13.

By virtue of this coupling between the flexing-preventing annular protrusion 33 and the guiding slot 34, the rotating body 16 is prevented from flexing.

The motorized redirection device 15 comprises, in addition to the rotating body 16, an actuation motor 35, which is fixed to a bracket 36 that extends within the box-like body 11.

The electric motor 35 is for example of the 12- or 24-volt DC type.

The valve 10 also comprises an onboard electronic unit 37 to which both the electric motor 35 and the seed passage detector 20 are interconnected for control and power supply.

The onboard electronic unit 37 in turn is connected to an external cable 38 for power supply and CAN-BUS control.

The onboard electronic unit 37 is provided with a "reverse" automation system.

The seed passage detector 20 is constituted by a photocell, which is supported by a C-shaped support 40 arranged so as to partially surround the exit passage 13.

The photocell is of the standard type or of the precision type.

The seed passage detector 20, interconnected to the electronic control unit 37, is configured to detect the passage of seeds or fertilizer through the exit passage 13; an operator on board an agricultural machine that uses a central dispenser 21 with said valves 10, by means of a display located in the driver's cab, is warned whether the seeds, for each valve 10, pass or not.

The seed passage detector 20, when constituted by a precision photocell interconnected to the electronic control unit 37, is configured to count the seeds that pass through the exit passage 13 of a valve 10; an operator can program an automatic distribution of a certain number of seeds on the basis of a certain seeding surface.

The obtainable counting precision is approximately 95%-98%.

The effectiveness of the motorized redirection device 15 and the seed passage detector 20 with precision photocell allow to provide extremely precise, safe and repeatable seeding operations.

Proximate to the bracket 36, the rotating body 16 is provided with optical limit switches 42.

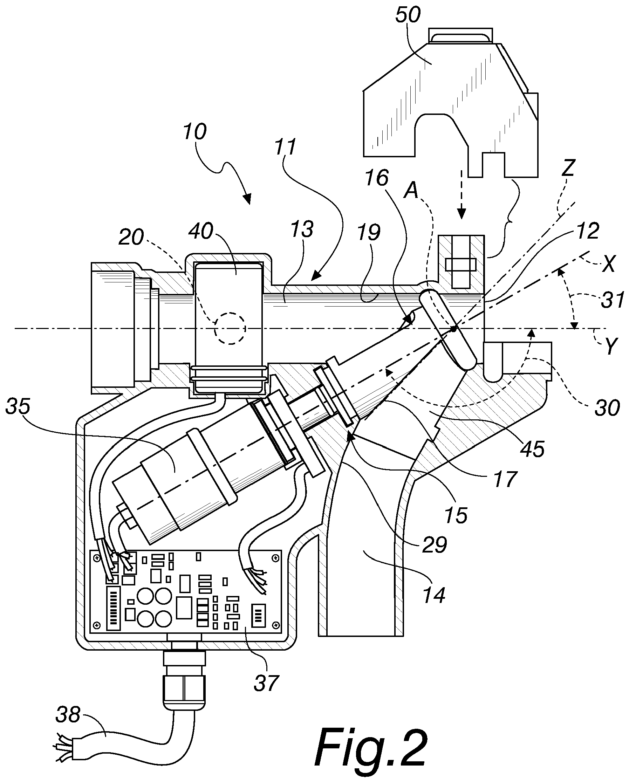

The valve 10 can have a plug 45, exemplified in Figure 2, configured to obstruct the discharge passage 14, with which the three-way valve 10 operates like a two-way valve.

The valve 10 is specifically indicated for positive-pressure pneumatic seeders, for the exclusion of the seeding rows or fertilization rows, with integrated optical feedback sensor.

The seeds are conveyed by the air generated by a blower with a pressure of approximately 0.5 bars, which is not visible in the figures and is to be understood as known, towards the tubular rising head 23 to which all the tubes of the seeder come are connected, one tube for each row.

The valve 10 is fixed to the head 23 by means of an adapted coupling 50, which cooperates to define the entry passage 12 of the valve 10.

A tube of the seeding line 51 is present in output from the valve 10.

The tubular mushroom (head) 23 has, in its central part, a rising duct 52 having a large diameter, where the pressurized air pushes the seeds which are automatically distributed on the outlets to which the valves 10 are connected.

The valve 10 has an internal electrical modularity during assembly and it is possible to choose the standard version or the CAN-BUS version.

With the standard version, two wires whose power supply pulse with polarity reversal arrives are sufficient; in the CAN-BUS version, five wires are required, of which two wires for the fixed power supply and two wires for the CAN-BUS on which the opening and closing management pulses arrive.

The valve 10, as mentioned above, can be of the three-way or two-way type.

The two-way valve 10 has seed blocking determined by the plug 45 and the seeds do not return into the hopper reservoir 22.

The three-way valve 10 is designed to determine the return of the seeds into the hopper reservoir when the valve 10 is in the closed configuration. The choice between a two-way valve or a three-way valve depends on the various seeder models.

The operation of the valve 10 according to the invention is as follows.

The valve 10 is applied between the tubular head 23 and the seeding tube 51, so as to allow the reversible prevention of seeding in a preset seeding row.

In order to perform seeding through the valve 10, the rotation of the rotating body 16 of the motorized redirection device 15 is actuated so as to open the exit passage 13 and obstruct the discharge passage 14 if present.

The valves 10 can be manufactured in different volume dimensions in order to adapt to the different diameters of the seeding tubes.

As soon as the electrical command arrives, the motor 35 turns the rotating body 16, performing an operation of the proportional type from the beginning to the end, with a cycle time for example between 0.1 and 3 seconds, which depends on the type of reduction unit, internal to the motor 35, that is used.

With this valve 10, of the proportional type, the mechanical overloads are reduced with respect to commercially available ON-OFF valves, with a consequent saving of electric power, production costs and with reliability over time.

In practice it has been found that the invention achieves the intended aim and objects.

In particular, the invention provides a valve for seed dispenser for seeders that is more reliable and more precise than known valves.

Furthermore, the invention provides a valve in which the risk of failed or incorrect closure of the valve, with consequent dispersion of seeds, is eliminated.

Moreover, the invention provides a valve the motorized redirection device of which acts precisely and repeatably and without its motor being subjected to unwanted stresses.

Furthermore, the invention provides a valve that allows higher precision in the analysis of the flow of seeds.

The invention thus conceived is susceptible of numerous modifications and variations, all of which are within the scope of the appended claims; all the details may further be replaced with other technically equivalent elements.

In practice, the components and materials used, so long as they are compatible with the specific use, as well as the contingent shapes and dimensions, may be any according to the requirements and the state of the art.

The disclosures in Italian Patent Application No. 102016000127218 (UA2016A009086) from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A valve (10) for a seed dispenser for seeders, comprising a box-like body (11), inside which there is an entry passage (12) and an exit passage (13) and wherein there is a motorized redirection device (15),
said valve (10) being **characterized in that**
- it comprises a return discharge passage (14), said motorized redirection device (15) being configured to determine the transit of seeds from said entry passage (12) either toward said exit passage (13) or toward said return discharge passage (14);
- said motorized redirection device (15) comprises a rotating body (16) which has a cylindrical volume with a redirection surface (17) that is transverse with respect to its rotation axis (X), the perimetric edge (18) of said redirection surface (17) being shaped to arrange itself proximate to the internal surface (19, 29) of said exit passage (13) and discharge passage (14) in a configuration for the transit of seeds toward said exit passage, in a configuration for the transit of seeds toward said discharge passage and return, and in the intermediate configurations;
- at said exit passage (13) there being a seed passage detector (20).

2. The valve according to claim 1, **characterized in that** said rotating body (16) has, at its free end, a flexing-preventing external annular protrusion (33), which extends from the perimetric edge (18) with an axial symmetry with respect to the rotation axis (X), said flexing-preventing annular protrusion (33) being arranged so as to rotate in an annular guiding slot (34) that is formed inside the box-like body (11).

3. The valve according to one or more of the preceding claims, **characterized in that** said annular guiding slot (34) is formed on the internal surface of the channels that form the entry passage (12) and the exit passage (13).

4. The valve according to one or more of the preceding claims, **characterized in that** said motorized redirection device (15) comprises, in addition to the rotating body (16), an actuation motor (35), which is fixed to a bracket (36) that is extended within the box-like body (11).

5. The valve according to one or more of the preceding claims, **characterized in that** it comprises an onboard electronic unit (37) to which both the electric motor (35) and the seed passage detector (20) are interconnected for control and power supply.

6. The valve according to one or more of the preceding claims, **characterized in that** said seed passage detector (20) is constituted by a photocell.

7. The valve according to one or more of the preceding claims, **characterized in that** said photocell is of the standard type.

8. The valve according to one or more of the preceding claims, **characterized in that** said photocell is of the precision type.
